# EUROPÄISCHE PATENTSCHRIFT

(11) **EP 3 368 357 B1**
(45) Veröffentlichungstag und Bekanntmachung des Hinweises auf die Patenterteilung: **09.10.2019**
(21) Anmeldenummer: 16798655.3
(22) Anmeldetag: 28.10.2016
(51) Int. Cl.: B60J 1/10, B60J 10/70

(54) **SCHEIBENANORDNUNG, INSBESONDERE KAROSSERIE-SCHEIBENANORDNUNG**
WINDOW ASSEMBLY
ENSEMBLE DE FENÊTRE

(30) Priorität: 29.10.2015 DE 102015013974
(43) Veröffentlichungstag der Anmeldung: 05.09.2018
(73) Patentinhaber: Henniges Automotive GmbH & Co. KG, 31547 Rehburg Loccum (DE)
(72) Erfinder: KREYE, Bernhard, 31515 Wunstorf (DE); WINTER, Sascha, 31832 Springe (DE)
(74) Vertreter: Jabbusch, Matthias
(86) Internationale Anmeldenummer: PCT/EP2016/076055
(87) Internationale Veröffentlichungsnummer: WO 2017/072288

(56) Entgegenhaltungen:
- EP-A1- 0 885 762
- EP-A1- 2 103 470
- EP-A1- 2 740 620
- EP-A2- 0 201 384
- WO-A1-2009/001910
- WO-A1-2011/021021
- DE-A1- 4 228 881
- DE-A1-102013 003 243
- FR-A1- 2 952 144
- FR-A1- 2 965 220
- US-A- 4 163 076
- US-B1- 6 546 683

## Beschreibung

Die Erfindung betrifft eine Scheibenanordnung, insbesondere eine Karosserie-Scheibenanordnung, umfassend zumindest eine Glasscheibe sowie ein die Ränder der Glasscheibe einfassendes Profilrahmenbauteil, das auf einer Seite der Glasscheibe auf deren Scheibenrand aufgelegt ist.

Scheibenanordnungen der vorbezeichneten Art werden zu vielen Zwecken eingebaut. Beispielsweise werden derartige Scheibenanordnungen in Karosserien von Kraftfahrzeugen eingebaut. Die der Glasscheibe zugeordneten Profilrahmenbauteile dienen einer Verbindung zwischen Glasscheibe und Karosseriebauteilen. Eine gattungsgemäße Scheibenanordnung ist z.B. zu sehen in Dokument EP 2740 620, und weiter in US 4163076.

Im Stand der Technik sind verschiedene Technologien für das Zuordnen von Profilrahmenbauteilen zu einer Glasscheibe vorgeschlagen worden. Profilrahmenbauteile können auf den Rand einer Glasscheibe aufgelegt werden und mit der Glasscheibe verbunden werden. So ist es möglich, Profilrahmenbauteile von beiden Seiten der Glasscheibe anzunähern, jeweils auf den Rand der Glasscheibe zur Anlage zu bringen und in dieser Anlage mit der Glasscheibe zu verkleben. Auch das Anspritzen von Profilrahmenbauteilen an eine Glasscheibe oder die Verwendung von direkt an die Glasscheibe anextrudierten Profilrahmenbauteilen sind bekannt.

Der Erfindung liegt die Aufgabe zugrunde, eine Scheibenanordnung der eingangs genannten Gattung aufzuzeigen, mit der ein Einbauen von Glasscheiben beispielsweise in eine Kraftfahrzeugkarosserie erleichtert ist.

Diese Aufgabe ist erfindungsgemäß dadurch gelöst, dass das Profilrahmenbauteil mehrlagig ausgebildet ist, wobei eine auf die Glasscheibe auflegbare Lage aus einem hartem Material gefertigt ist und wenigstens eine weitere Lage aus einem weichen Material gefertigt ist, dass das Profilrahmenbauteil in seiner aus hartem Material gefertigten Lage mit der Glasscheibe in Anlage bringbare Anlageelemente mit Auftragsflächen für einen Kleber aufweist und in seiner aus weichem Material gefertigten Lage über die Lage aus hartem Material vorstehende Vorsprünge hat.

Bei der erfindungsgemäßen Scheibenanordnung ist nur ein Profilrahmenbauteil vorgesehen. Dieses kann an die Glasscheibe angenähert werden und auf deren Rand aufgelegt werden. Das Profilrahmenbauteil ist erfindungsgemäß mehrlagig ausgebildet. Es hat eine Lage aus hartem Material, mit dieser wird es auf eine Seite der Glasscheibe im Bereich des Randes aufgelegt. Weiterhin sind in dieser harten Lage Anlageelemente vorgesehen. Diese Anlageelemente der harten Lage des Profilrahmenbauteils verbinden sich mit der Glasscheibe. Das ermöglicht eine Anordnung des Profilrahmenbauteils an der Glasscheibe nach deren Einbau in andere Bauteile, z. B. in eine Kraftfahrzeugkarosserie, so kann ein Spalt zwischen Scheibenrand und Karosserieflansch abgedeckt werden.

Das Profilrahmenbauteil weist erfindungsgemäß eine weitere Lage auf und diese weitere Lage ist aus einem weichen Material ausgebildet. Die zweite Lage deckt nicht nur die erste Lage des Profilrahmenbauteils ab, sie hat erfindungsgemäß über die Lage aus hartem Material vorstehende Vorsprünge. Aufgrund des Vorstehens über die harte Lage hinaus ist es möglich, dass auch die weiche Lage an weiteren Bauteilen anliegen kann. Ein weiteres Bauteil ist beispielsweise die Glasscheibe, so dass ein über die harte Lage hinausstehender Vorsprung der weichen Lage an die Glasscheibe angelegt wird und einen Ausgleich für auftretende Toleranzen bereitstellen kann. In gleicher Weise kann ein Vorsprung der aus dem weichen Material gefertigten Lage so weit vorstehen, dass er sich an einen Flansch einer Kraftfahrzeugkarosserie anlegt, wenn die erfindungsgemäße Scheibenanordnung ihren Einbauort erreicht hat. Auch Toleranzen im Bereich der hier gegebenen Kraftfahrzeugkarosserie können ausgeglichen werden.

Die an anderen Bauteilen anliegenden Vorsprünge aus weichem Material können bevorzugt einen Druck auf die miteinander durch Halteelemente verbundenen Profilrahmenbauteil und Glasscheibe ausüben, so dass das Profilrahmenbauteil gegen die Glasscheibe geführt wird. Die Glasscheibe wird üblicherweise an der Kraftfahrzeugkarosserie mit Hilfe von Kleber befestigt.

Die Auftragsflächen der Anlageelemente sind vorzugsweise plan ausgebildet. Eine derartige Auftragsfläche ist plan an eine Glasscheibe anlegbar. Eine Verklebung bewirkt dann eine unlösbare Verbindung zwischen Profilrahmenbauteil und Glasscheibe.

Die Auftragsflächen für den Kleber sind vorzugsweise an freien Enden von aus dem harten Material vorspringenden Anlageelementen angeordnet. Die Anlageelemente sind beispielsweise stegförmig ausgebildet, am freien Ende ist die Auftragsfläche für den Kleber angeordnet. Nach dieser Weiterbildung nimmt nur ein Teil der harten Lage des Profilrahmenbauteils an der Ausbildung der Auftragsfläche für den Kleber teil.

Dabei kann vorgesehen sein, dass in die Auftragsflächen rillenartige Vertiefungen eingebracht sind. In derartige Vertiefungen kann der Kleber teilweise eindringen, um eine lagefeste Verbindung mit dem Material der harten Lage einzugehen. Die Herausnahme von Material aus den Anlageelementen führt vorteilhaft zu einer Gewichtsersparnis.

Nach einer Weiterbildung der Erfindung kann vorgesehen sein, dass die aus dem harten Material vorspringenden Anlageelemente als Stege ausgebildet sind. Die Stege können einen kreisförmigen Querschnitt aufweisen, dabei können die Stege auch als Hohlzylinder ausgebildet sein. Eine Verklebung des Profilrahmenbauteils mit der Scheibe kann punktuell oder umlaufend, das heißt um den Umfangsrand der Scheibe laufend, vorgenommen sein.

Die Vorsprünge der Lage aus weichem Material weisen nach einer Weiterbildung der Erfindung jeweils eine Lippenbauform auf. Eine derartige Lippenbauform kann sich an ein anderes Bauteil anlegen, dabei kann die Lippe gestaucht werden und gleichwohl ihre dichtende Anlage behalten. Es ist möglich, dass eine Lippe von der Oberfläche der aus weichem Material gefertigten Lage etwa senkrecht abstehend ausgebildet ist, um einen größeren Zwischenraum zwischen Scheibenanordnung und z.B. zugeordnetem Karosserieflansch zu überbrücken.

Nach einer nächsten Weiterbildung der Erfindung ist vorgesehen, dass das Profilrahmenbauteil eine im Schnitt Bügelform hat, die Auflageflächen zur Auflage auf der Glasscheibe hat und die mit der Lage aus weichem Material abgedeckt ist. Das Profilrahmenbauteil kann somit punktförmig auf der Glasscheibe aufliegen und durch entsprechend ausgestaltete Breite eine Kleberaupe auf der anderen Seite der Glasscheibe abdecken. Durch die Abdeckung der harten Lage des Profilrahmenbauteils mit der Lage aus weichem Material ergibt sich darüberhinaus eine angenehme Haptik sowie eine ansprechende Gestaltungsmöglichkeit des Profilrahmenbauteils. Die Bügelform des Profilrahmenbauteils umschließt Hohlräume. Das Profilrahmenbauteil kann auf diese Weise materialsparend und damit gewichtssparend gefertigt werden.

Das Profilrahmenbauteil kann weiterhin mit einer Zierleiste ergänzt werden. Dadurch ist der erfindungsgemäßen Scheibenanordnung ein hochwertiges Aussehen verliehen.

Fertigungstechnisch kann dabei vorgesehen sein, dass die Lage aus weichem Material auf die Lage aus hartem Material aufgespritzt ist. So ist eine rationelle Fertigung gegeben, beide Lagen sind zudem fest miteinander verbunden.

Die harte Lage des Profilrahmenbauteils sind beispielsweise aus einem harten Kunststoff, wie PP, ABS oder aus Hart-PVC gefertigt. Die weitere Lage des Profilrahmenbauteils ist dagegen vorzugsweise aus einem weichen Kunststoff, wie TPE oder Weich-PVC ausgebildet.

Vorteilhaft ist die Verklebung der harten Komponente mit MS-Polymer. MS-Polymer benötigt dann keine Primerung der Glasscheibe. Das Kunststoffmaterial des Profilrahmenbauteils kann mit einer Beflammung oder mit einem Atmosphärenplasma vorbehandelt werden. Alternativ ist auch eine Verklebung mit 1K-PU oder 2K-PU möglich. Dann benötigt das Glas eine Vorbehandlung (Primerung). Geeignet ist auch eine Verklebung mit Schmelzkleber (Hotmelt). Die beiden Kleber können auch zusammen eingesetzt werden. Während das MS-Polymer langsam aushärtet, sorgt der Hotmelt für eine sichere Haftung bis zur vollständigen Verfestigung des MS-Polymeres.

Üblicherweise werden Glasscheiben in eine Karosse eingeklebt. Zur Fixierung werden dann häufig Klipse auf der Scheibeninnenseite befestigt, diese sorgen dann für eine lagegenaue Ausrichtung der Scheibe und halten die Scheibe in Position bis zur Aushärtung des Klebers. Diese Klipse können dann mit dem gleichen Klebesystem wie das Rahmenbauteil befestigt werden.

Ein Ausführungsbeispiel, aus dem sich weitere erfinderische Merkmale ergeben, ist in der Zeichnung dargestellt. Es zeigen:
Figur 1: eine Seitenansicht einer Glasscheibe für eine Kraftfahrzeugkarosserie,
Figur 2: eine Schnittansicht entlang der Schnittlinie 2-2 in Figur 1,
Figur 2a: eine maßstäbliche vergrößerte Teilansicht der Einzelheit S in Figur 2,
Figur 3: eine Schnittansicht entlang der Schnittlinie 3-3 in Figur 1 und
Figur 4: eine Schnittansicht entlang der Schnittlinie 4-4 in Figur 1.

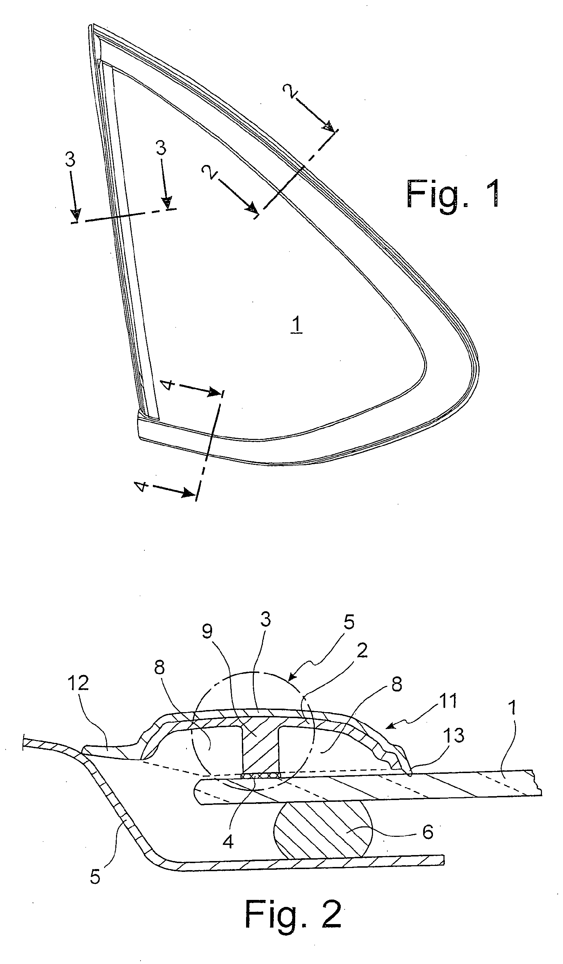

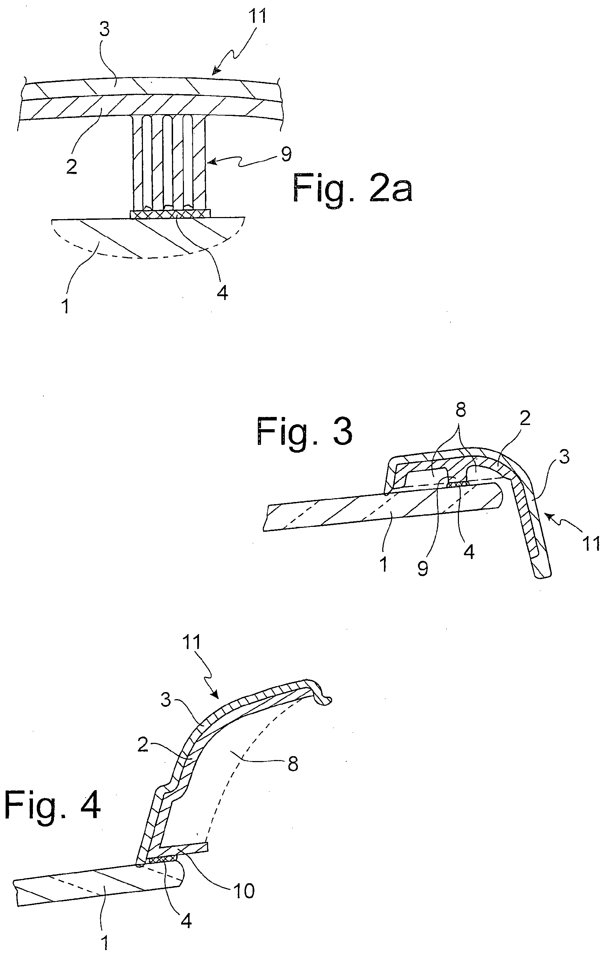

Die Glasscheibe in Figur 1 sowie zwei erfindungsgemäße Scheibenanordnungen auf. Die Glasscheibe 1 ist für ein hinteres Seitenfenster eines Kraftfahrzeuges vorgesehen, sie wird in einer Kraftfahrzeugkarosserie ortsfest verbaut. Ein Flansch 5 einer Kraftfahrzeugkarosserie ist in Figur 2 gezeigt.

Figur 2 zeigt eine Scheibenanordnung, die der Glasscheibe 1 in Figur 1 über einen Bogen von 180° zugeordnet ist. Auch die Schnittansichten in Figur 2a, 3 und 4 zeigen diese Scheibenanordnung.

Die Scheibenanordnung umfasst ein Profilrahmenbauteil 11. Das Profilrahmenbauteil 11 besteht aus einer Lage 2 aus hartem Material sowie aus einer Lage 3 aus weichem Material. Beide Lagen 2, 3 sind miteinander fest verbunden, beispielsweise durch Aufspritzen der weichen Lage 3 auf die harte Lage 2. Das Anlageelement 9 ist als Steg ausgebildet, dieser Steg kann einen kreisförmigen Querschnitt aufweisen. Mehrere Stege können in unmittelbarer Nebeneinanderlage angeordnet sein, um eine mehrfache punktuelle Verklebung zwischen Profilrahmenbauteil 11 und Glasscheibe 1 zu erreichen.

Die harte Lage 2 hat ein Anlageelement 9, das mit der Glasscheibe 1 in haltende Verbindung treten kann. Das Anlageelement 9 ist ausgebildet durch einen von der harten Lage 2 bereitgestellten Vorsprung, welche gegen die Glasscheibe 1 geführt und mit dieser durch einen Kleber 4 verbunden ist. Das Profilrahmenbauteil 11 ist durch dieses Anlageelement 9 mit der Glasscheibe 1 verbunden.

Die weiche Lage 3 des Profilrahmenbauteils 11 deckt die harte Lage 2 des Profilrahmenbauteils 11 vollständig ab. Sie hat darüber hinaus über die harte Lage 2 vorstehende Vorsprünge 12 und 13. Diese Vorsprünge 12, 13 stehen über die harte Lage 2 hinaus vor und sind an benachbarte Bauteile anlegbar. So ist der Vorsprung 13 gegen die Glasscheibe 1 geführt. Dieser Vorsprung 13 dichtet die Anlage des Profilrahmenbauteils 11 an der Glasscheibe 1 in diesem Bereich ab. Der andere Vorsprung 12 steht von der Oberfläche des Profilrahmenbauteils 11 vor und bildet eine Dichtlippe aus, die gegen den Karosserieflansch 5 geführt ist. Damit wird der Abstand zwischen dem Rand der Glasscheibe 1 und dem zugeordneten Karosserieflansch 5 überbrückt und abgedichtet.

Die breite Ausbildung des Vorsprungs 12 ist auch in Figur 1 zu erkennen.

Figur 2a zeigt im Detail die Ausbildung des Anlageelementes 9. Dieses weist rillenartige Vertiefungen auf. Diese durchdringen die gesamte Höhe des als Vorsprung ausgebildeten Anlageelementes 9. Der Kleber 4 kann abschnittsweise in diese Rillen vorstehen.

Auch dem geraden Rand der Glasscheibe 1 in Figur 1 ist eine erfindungsgemäße Scheibenanordnung zugeordnet, wie Figur 3 zeigt. Auch hier ist ein Profilrahmenbauteil 11 mit der erfindungsgemäßen Ausbildung einem Rand der Glasscheibe 1 zugeordnet. Das Anlageelement 9 ist wieder als Vorsprung ausgebildet.

In Figur 4 ist das Anlageelement 10 vorhanden, das durch eine Abwinkelung der Lage 2 aus hartem Material ausgebildet ist.

## Patentansprüche

1. Scheibenanordnung, insbesondere Karosserie-Scheibenanordnung, umfassend zumindest eine Glasscheibe sowie ein die Ränder der Glasscheibe einfassendes Profilrahmenbauteil, das auf einer Seite der Glasscheibe auf den Scheibenrand aufgelegt ist,
**dadurch gekennzeichnet,**
**dass** das Profilrahmenbauteil (11) mehrlagig ausgebildet ist, wobei eine auf die Glasscheibe (1) auflegbare Lage (2) aus einem hartem Material gefertigt ist und wenigstens eine weitere Lage (3) aus einem weichen Material gefertigt ist, dass das Profilrahmenbauteil (11) in seiner aus hartem Material gefertigten Lage (2) mit der Glasscheibe (1) in Anlage bringbare Anlageelemente (9, 10) mit Auftragsflächen für einen Kleber (4) aufweist und in seiner aus weichem Material gefertigten Lage (3) über die Lage (2) aus hartem Material vorstehende Vorsprünge (12, 13) hat.

2. Scheibenanordnung nach Anspruch 1, **dadurch gekennzeichnet, dass** die Auftragsflächen der Anlageelemente (9, 10) plan ausgebildet sind.

3. Scheibenanordnung nach Anspruch 2, **dadurch gekennzeichnet, dass** die Auftragsflächen an freien Enden von aus dem harten Material vorspringenden Anlageelementen (9, 10) angeordnet sind.

4. Scheibenanordnung nach Anspruch 3, **dadurch gekennzeichnet, dass** in die Auftragsflächen rillenartige Vertiefungen eingebracht sind.

5. Scheibenanordnung nach Anspruch 3 oder 4, **dadurch gekennzeichnet, dass** die Anlageelemente (9, 10) Stege sind.

6. Scheibenanordnung nach Anspruch 5, **dadurch gekennzeichnet, dass** die Stege einen kreisförmigen Querschnitt aufweisen.

7. Scheibenanordnung nach einem der vorhergehenden Ansprüche, **dadurch gekennzeichnet, dass** die aus weichem Material gefertigten Vorsprünge (12, 13) jeweils eine Lippenbauform haben.

8. Scheibenanordnung nach einem der vorhergehenden Ansprüche, **dadurch gekennzeichnet, dass** das Profilrahmenbauteil (11) eine im Schnitt Bügelform hat, die Auflageflächen zur Auflage auf der Glasscheibe (1) hat und deren harte Lage (2) mit der Lage (3) aus weichem Material abgedeckt ist.

9. Scheibenanordnung nach Anspruch 8, **dadurch gekennzeichnet, dass** die Lage (3) aus weichem Material auf die Lage (2) aus hartem Material aufgespritzt ist.

10. Scheibenanordnung nach einem der vorhergehenden Ansprüche, **dadurch gekennzeichnet, dass** das Profilrahmenbauteil (11) in seiner auf die Glasscheibe (1) aufgelegten Lage (2) aus hartem Kunststoff wie PP, ABS, Hart-PVC, und in der weiteren Lage (3) aus weichem Kunststoff, wie TPE, Weich-PVC, ausgebildet ist.

11. Scheibenanordnung nach einem der vorhergehenden Ansprüche, **dadurch gekennzeichnet, dass** der Kleber (4) ein MS-Polymer oder ein Schmelzkleber ist.

## Claims

1. A window assembly, in particular vehicle body window assembly, comprising at least one glass pane and a profile frame component which surrounds the edges of the glass pane and is placed on the pane edge on one side of the glass pane,
**characterised in that**
the profile frame component (11) is multi-layered, wherein a layer (2) which can be placed onto the glass pane (1) is manufactured from a hard material, and at least one further layer (3) is manufactured from a soft material; the profile frame component (11), in its layer (2) manufactured from hard material, has contact elements (9, 10) which can be brought into contact with the glass pane (1) and have application faces for an adhesive (4), and in its layer (3) manufactured from soft material, has projections (12, 13) which protrude beyond the layer (2) of hard material.

2. The window assembly according to Claim 1,
**characterised in that**
the application faces of the contact elements (9, 10) are planar.

3. The window assembly according to Claim 2,
**characterised in that**
the application faces are arranged on free ends of contact elements (9, 10) protruding from the hard material.

4. The window assembly according to Claim 3,
**characterised in that**
groove-like depressions are made in the application faces.

5. The window assembly according to Claim 3 or 4,
**characterised in that**
the contact elements (9, 10) are bridges.

6. The window assembly according to Claim 5,
**characterised in that**
the bridges have a circular cross-section.

7. The window assembly according to any one of the preceding claims,
**characterised in that**
the projections (12, 13) manufactured from soft material each have a lip design.

8. The window assembly according to any one of the preceding claims,
**characterised in that**
the profile frame component (11) has a bow shape in section, which has contact faces for contact with the glass pane (1) and the hard layer (2) of which is covered with the layer (3) of soft material.

9. The window assembly according to Claim 8,
**characterised in that**
the layer (3) of soft material is sprayed onto the layer (2) of hard material.

10. The window assembly according to any one of the preceding claims,
**characterised in that**
the profile frame component (11) is formed from hard plastic such as PP, ABS, hard PVC in its layer (2) placed onto the glass pane (1) and from soft plastic such as TPE, soft PVC in the further layer (3).

11. The window assembly according to any one of the preceding claims,
**characterised in that**
the adhesive (4) is an MS polymer or a melt adhesive.

## Revendications

1. Ensemble de vitre, notamment ensemble de vitre d'une carrosserie, comprenant au moins un vitrage, ainsi qu'un élément en cadre profilé, encadrant les bords du vitrage, qui sur une face du vitrage est posé sur le bord du vitrage,
**caractérisé en ce que**
l'élément en cadre profilé (11) est conçu en plusieurs couches, une couche (2) susceptible d'être posée sur le vitrage (1) étant fabriquée en une matière dure et au moins une autre couche (3) étant fabriquée en une matière souple, **en ce que** dans sa couche (2) fabriquée en matière dure, l'élément en cadre profilé (11) comporte des éléments d'appui (9, 10) susceptibles d'être amenés en appui sur le vitrage (1), pourvus de surfaces d'application d'un agent adhésif (4) et dans sa couche (3) fabriquée en matière souple, dispose de saillies (12, 13) débordant au-delà de la couche (2) en matière dure.

2. Ensemble de vitre selon la revendication 1, **caractérisé en ce que** les surfaces d'application des éléments d'appui (9, 10) sont conçues sous forme plane.

3. Ensemble de vitre selon la revendication 2, **caractérisé en ce que** les surfaces d'application sont placées sur des extrémités libres d'éléments d'appui (9, 10) saillant hors de la matière dure.

4. Ensemble de vitre selon la revendication 3, **caractérisé en ce que** dans les surfaces d'application sont ménagés des creux de type cannelures.

5. Ensemble de vitre selon la revendication 3 ou 4, **caractérisé en ce que** les éléments d'appui (9, 10) sont des listels.

6. Ensemble de vitre selon la revendication 5, **caractérisé en ce que** les listels présentent une section transversale de forme circulaire.

7. Ensemble de vitre selon l'une quelconque des revendications précédentes, **caractérisé en ce que** les saillies (12, 13) fabriquées en matière souple disposent chacune d'une structure en forme de lèvre.

8. Ensemble de vitre selon l'une quelconque des revendications précédentes, **caractérisé en ce que** l'élément en cadre profilé (11) présente en coupe une forme d'étrier, qui dispose de surfaces d'appuis pour l'appui sur le vitrage (1) et dont la couche (2) dure est recouverte par la couche (3) en matière souple.

9. Ensemble de vitre selon la revendication 8, **caractérisé en ce que** la couche (3) en matière souple est pulvérisée sur la couche (2) en matière dure.

10. Ensemble de vitre selon l'une quelconque des revendications précédentes, **caractérisé en ce que** dans sa couche (2) posée sur le vitrage (1), l'élément en cadre profilé (11) est conçu en une matière plastique dure, telle que le PP, l'ABS, le PVC dur, et dans l'autre couche (3), est conçu en matière plastique souple, telle que le TPE, le PVC souple.

11. Ensemble de vitre selon l'une quelconque des revendications précédentes, **caractérisé en ce que** l'agent adhésif (4) est un polymère MS un agent adhésif thermofusible.
